# FASCICULE DE BREVET EUROPEEN

(11) **EP 4 108 903 B1**
(45) Date de publication et mention de la délivrance du brevet: **17.04.2024**
(21) Numéro de dépôt: 22179802.8
(22) Date de dépôt: 20.06.2022
(51) Int. Cl.: F02K 1/72

(54) **TURBORÉACTEUR DOUBLE FLUX COMPORTANT UNE SÉRIE DE LAMES ROTATIVES POUR OBTURER LA VEINE DU FLUX SECONDAIRE**
DOPPELFLUSS-TURBOTRIEBWERK, DAS EINE REIHE VON ROTIERENDEN SCHAUFELBLÄTTERN UMFASST, UM DEN KANAL DES SEKUNDÄRSTROMS ABZUDICHTEN
DUAL-FLOW TURBOJET ENGINE COMPRISING A SERIES OF ROTARY STRIPS FOR BLOCKING THE SECONDARY FLOW STREAM

(30) Priorité: 22.06.2021 FR 2106646
(43) Date de publication de la demande: 28.12.2022
(73) Titulaire: AIRBUS OPERATIONS, 31060 Toulouse Cedex 9 (FR)
(72) Inventeur: SILLIERES, Lionel, 31060 TOULOUSE (FR); VANDERBAUWEDE, Simon, 31060 TOULOUSE (FR)
(74) Mandataire: Cabinet Le Guen Maillet

(56) Documents cités:
- EP-A1- 3 686 418
- EP-A1- 3 715 612
- FR-A1- 3 095 015

## Description

### DOMAINE TECHNIQUE

La présente invention concerne un turboréacteur double flux qui comporte une série de lames qui sont montées rotatives pour obturer la veine du flux secondaire, ainsi qu'un aéronef comportant au moins un tel turboréacteur double flux.

### ÉTAT DE LA TECHNIQUE ANTÉRIEURE

Un aéronef comporte un fuselage de chaque côté duquel est fixée une aile. Sous chaque aile est suspendu au moins un turboréacteur double flux. Chaque turboréacteur double flux est fixé sous l'aile par l'intermédiaire d'un mât qui est fixé entre la structure de l'aile et la structure du turboréacteur double flux.

Le turboréacteur double flux comporte un moteur et une nacelle qui est fixée autour du moteur. Le turboréacteur double flux présente entre la nacelle et le moteur, une veine secondaire dans laquelle circule un flux secondaire.

La nacelle comporte une pluralité de portes d'inversion, chacune étant mobile en rotation sur la structure de la nacelle entre une position escamotée dans laquelle elle est en dehors de la veine secondaire et une position déployée dans laquelle elle se positionne en travers de la veine secondaire afin de dévier le flux secondaire vers une fenêtre qui est dans la paroi de la nacelle et qui est ouverte entre la veine secondaire et l'extérieur de la nacelle.

Ainsi, le flux secondaire est dévié vers l'extérieur et plus précisément vers l'avant du turboréacteur afin de produire une contre-poussée. En outre, le déplacement de chaque porte d'inversion est réalisé à l'aide d'une bielle qui traverse la veine secondaire en position escamotée et qui obstrue donc partiellement la veine secondaire.

Un mécanisme de déplacement de portes d'inversion est connu de FR3095015 A1.

Bien que les portes d'inversion donnent entière satisfaction, il est souhaitable de trouver des mécanismes différents, en particulier des mécanismes moins lourds et qui ne présentent aucune obstruction du flux secondaire en position escamotée.

### EXPOSÉ DE L'INVENTION

Un objet de la présente invention est de proposer un turboréacteur double flux qui comporte une série de lames qui sont montées rotatives pour obturer la veine du flux secondaire.

À cet effet, est proposé un turboréacteur double flux présentant un axe longitudinal et comportant un moteur et une nacelle entourant le moteur qui comporte un carter de soufflante, où une veine d'un flux secondaire est délimitée entre la nacelle et le moteur et dans laquelle un flux d'air circule selon un sens d'écoulement, ladite nacelle comportant :
- une structure fixe fixée au carter de soufflante,
- un ensemble mobile présentant un capot mobile et un coulisseau, le capot mobile étant fixé au coulisseau, le coulisseau étant mobile en translation sur la structure fixe selon une direction de translation entre une position avancée dans laquelle le coulisseau est positionné de manière à ce que le capot mobile soit rapproché du carter de soufflante et une position reculée dans laquelle le coulisseau est positionné de manière à ce que le capot mobile soit éloigné du carter de soufflante pour définir entre eux une fenêtre ouverte entre la veine et l'extérieur de la nacelle,
- une pluralité de lames dont une lame dite première lame, chacune comportant une première extrémité montée mobile en rotation sur le coulisseau autour d'un premier axe de rotation et où les lames sont décalées angulairement de proche en proche autour de l'axe longitudinal, où chaque lame est mobile entre une position escamotée dans laquelle la lame est en dehors de la veine et une position déployée dans laquelle la lame est en travers de la veine,
- un ensemble d'actionneurs assurant le déplacement du coulisseau entre la position avancée et la position reculée, et inversement, et
- un système de manoeuvre qui déplace chaque lame de la position escamotée à la position déployée lorsque le coulisseau se déplace de la position avancée à la position reculée, et inversement, où le système de manoeuvre comporte :
- pour chaque lame, un arbre principal monté mobile en rotation sur le coulisseau autour du premier axe de rotation auquel la lame est fixée par sa première extrémité,
- pour chaque paire de lames voisines, des moyens de transmission qui transmettent la rotation d'une lame de la paire à l'autre lame de la même paire,
- un système d'entraînement qui, assure la conversion du mouvement de translation du coulisseau en un mouvement de rotation de la première lame et qui comporte :
- un système de vis à billes avec une tige rainurée reliée par une liaison pivot au coulisseau dont l'axe de vis est globalement parallèle à la direction de translation, et un écrou à billes fixé à la structure fixe où l'écrou à billes coopère avec la tige rainurée pour créer une liaison hélicoïdale,
- un train épicycloïdal avec un pignon planétaire solidaire d'une extrémité de la tige rainurée, une couronne planétaire montée fixe sur le coulisseau, un porte satellites monté mobile en rotation sur le coulisseau, et une pluralité de satellites montés libres en rotation sur le porte satellites, où les satellites sont répartis autour du pignon planétaire et engrènent avec le pignon planétaire, et où la couronne planétaire entoure les satellites et engrène avec eux,
- un bras solidaire du porte satellites et désaxé par rapport à l'axe de vis,
- un deuxième levier de transmission solidaire dudit arbre principal de la première lame,
- un fût monté mobile en rotation sur le coulisseau autour d'un deuxième axe de rotation globalement parallèle à la direction de translation, où le fût porte un premier bras de basculement et un deuxième bras de basculement,
- un premier levier où une première extrémité du premier levier est montée articulée sur le bras et une deuxième extrémité du premier levier est montée articulée sur le premier bras de basculement, où l'articulation du premier levier sur le bras est une rotation dont l'axe de rotation est parallèle et désaxé par rapport à l'axe de vis et où l'articulation du premier levier sur le premier bras de basculement est une rotation dont l'axe de rotation est parallèle et désaxé par rapport au deuxième axe de rotation du fût,
- un deuxième levier où une première extrémité du deuxième levier est montée articulée sur le deuxième levier de transmission et une deuxième extrémité du deuxième levier est montée articulée sur le deuxième bras de basculement, et où l'articulation du deuxième levier sur le deuxième levier de transmission est une rotation dont l'axe de rotation est parallèle et désaxé par rapport au premier axe de rotation, et où l'articulation du deuxième levier sur le deuxième bras de basculement est une rotation dont l'axe de rotation est parallèle et désaxé par rapport au deuxième axe de rotation du fût.

Un tel turboréacteur permet une réduction de masse en remplaçant les portes d'inversion et leurs mécanismes d'entraînement par des lames pivotantes plus légères avec un système de manoeuvre simplifié.

Avantageusement, le deuxième levier de transmission, le deuxième levier et le deuxième bras de basculement sont dimensionnés de manière à ce qu'en position avancée du coulisseau et en position escamotée des lames, le deuxième axe de rotation, l'axe de rotation de l'articulation entre le deuxième levier et le deuxième bras de basculement, et l'axe de rotation de l'articulation entre le deuxième levier et le deuxième levier de transmission, sont coplanaires et l'axe de rotation de l'articulation entre le deuxième levier et le deuxième bras de basculement est entre les deux autres.

Avantageusement, le bras, le premier levier et le premier bras de basculement sont dimensionnés de manière à ce qu'en position reculée du coulisseau et en position déployée des lames, l'axe de vis, l'axe de rotation de l'articulation entre le bras et le premier levier, et l'axe de rotation de l'articulation entre le premier levier et le premier bras de basculement, sont coplanaires et l'axe de rotation de l'articulation entre le bras et le premier levier est entre les deux autres.

Avantageusement, les moyens de transmission comportent pour chaque arbre principal de ladite paire de lames voisines, un premier levier de transmission solidaire dudit arbre principal, et une bielle dont chaque extrémité est montée articulée sur l'un des deux premiers leviers de transmission.

Avantageusement, la tige rainurée est fixée au pignon planétaire à travers un cardan. L'invention propose également un aéronef comportant au moins un turboréacteur double flux selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef comportant un turboréacteur double flux selon l'invention,
[Fig. 2] est une vue en perspective du turboréacteur double flux selon l'invention en position avancée et escamotée,
[Fig. 3] est une vue en perspective du turboréacteur double flux selon l'invention en position reculée et déployée,
[Fig. 4] est une représentation schématique d'un turboréacteur double flux selon l'invention vu en coupe par un plan vertical,
[Fig. 5] est une vue en coupe d'un système de manoeuvre selon l'invention, et
[Fig. 6] est une vue en perspective du système de manoeuvre selon l'invention.

### EXPOSÉ DÉTAILLÉ DE MODES DE RÉALISATION

Dans la description qui suit, les termes relatifs à une position sont pris en référence au sens d'écoulement de l'air dans un turboréacteur qui s'écoule donc de l'avant vers l'arrière de l'aéronef.

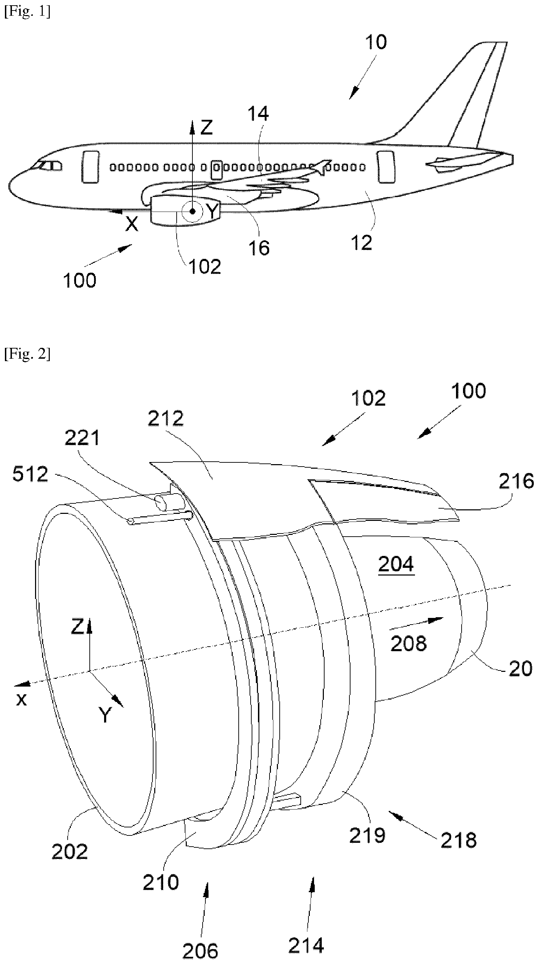

La Fig. 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

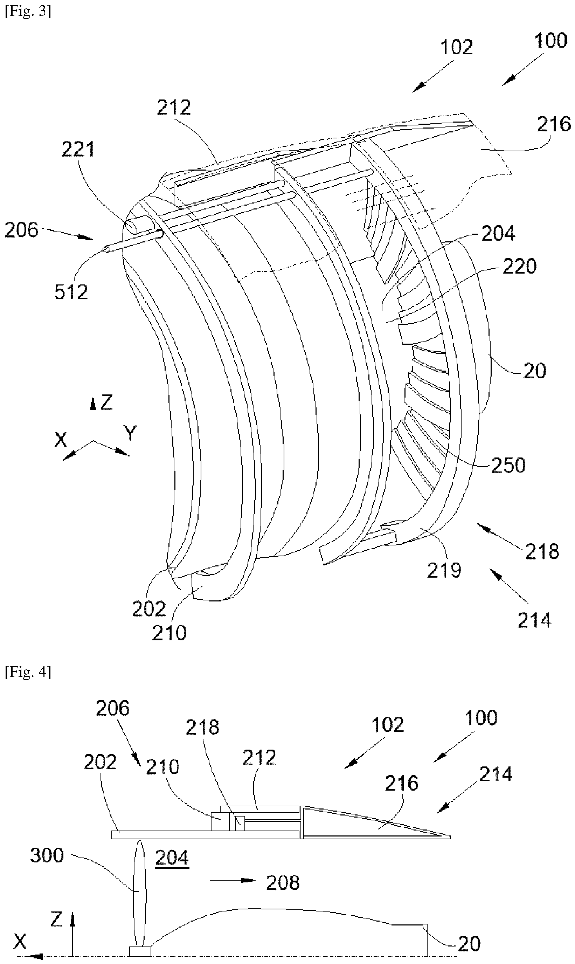

La Fig. 2 et la Fig. 3 montrent le turboréacteur double flux 100 qui présente une nacelle 102 et un moteur 20 qui est logé à l'intérieur de la nacelle 102 et qui comporte un carter de soufflante 202. Le moteur 20 est matérialisé par sa partie arrière d'éjection.

Dans la description qui suit, et par convention, on appelle X l'axe longitudinal du turboréacteur double flux 100 qui est parallèle à l'axe longitudinal de l'aéronef 10 orienté positivement vers l'avant de l'aéronef 10, on appelle Y l'axe transversal qui est horizontal lorsque l'aéronef est au sol, et Z l'axe vertical, ces trois directions X, Y et Z étant orthogonales entre elles.

La Fig. 2 et la Fig. 3 montrent le turboréacteur double flux 100 dans deux positions d'utilisation différentes et la Fig. 4 montre une représentation schématique en coupe du turboréacteur double flux 100.

Le turboréacteur double flux 100 présente entre la nacelle 102 et le moteur 20, une veine 204 dans laquelle circule un flux secondaire 208 provenant de l'entrée d'air à travers une soufflante 300 et qui s'écoule donc selon le sens d'écoulement qui va de l'avant vers l'arrière.

La nacelle 102 présente une structure fixe 206 qui est montée fixe sur le carter de soufflante 202. La structure fixe 206 est composée en particulier ici d'un cadre avant 210 monté autour du carter de soufflante 202 et de panneaux extérieurs 212 formant une surface aérodynamique qui sont montrés en transparence sur la Fig. 3 et dont une partie est découpée sur les Figs. 2 et 3.

La nacelle 102 présente un ensemble mobile 214 qui présente un capot mobile 216 (également en transparence sur la Fig. 3) dont une partie est découpée sur les Figs. 2 et 3 et qui forme les parois extérieures de la tuyère.

La nacelle 102 présente également un coulisseau 218. Le coulisseau 218 prend ici la forme d'un cylindre à parois ajourées. Le capot mobile 216 est fixé au et en aval du coulisseau 218 par rapport au sens d'écoulement du flux d'air dans le turboréacteur double flux 100.

Le coulisseau 218 est monté mobile en translation selon une direction de translation globalement parallèle à l'axe longitudinal X sur la structure fixe 206 de la nacelle 102.

Le coulisseau 218 est mobile entre une position avancée (Fig. 2) et une position reculée (Fig. 3) et inversement. En position avancée, le coulisseau 218 est positionné le plus en avant possible par rapport au sens d'écoulement de manière à ce que le capot mobile 216 soit rapproché des panneaux extérieurs 212 et du carter de soufflante 202 et forme ainsi une surface aérodynamique. En position reculée, le coulisseau 218 est positionné le plus en arrière possible par rapport au sens d'écoulement de manière à ce que le capot mobile 216 soit éloigné des panneaux extérieurs 212 et du carter de soufflante 202 de manière à définir entre eux une fenêtre 220.

En position avancée, le capot mobile 216 et les panneaux extérieurs 212 se prolongent de manière à définir la surface extérieure de la nacelle 102, et le capot mobile 216 et le carter de soufflante 202 se prolongent de manière à définir la surface extérieure de la veine 204.

En position reculée, le capot mobile 216 et le carter de soufflante 202 ainsi que les panneaux extérieurs 212 sont à distance et définissent entre eux la fenêtre 220 ouverte entre la veine 204 et l'extérieur de la nacelle 102. C'est-à-dire que l'air du flux secondaire 208 traverse la fenêtre 220 pour rejoindre l'extérieur du turboréacteur double flux 100.

Le guidage en translation du coulisseau 218 est réalisé par tous moyens appropriés, comme par exemple, des systèmes de glissières entre la structure fixe 206 et le coulisseau 218.

La nacelle 102 comporte également un ensemble d'actionneurs 221 assurant le déplacement en translation du coulisseau 218 entre la position avancée et la position reculée et inversement. Chaque actionneur 221 est commandé par une unité de contrôle, par exemple du type processeur, qui commande les déplacements dans un sens ou dans l'autre selon les besoins de l'aéronef 10.

Chaque actionneur 221 peut prendre par exemple la forme d'un vérin à double effet (deux directions de travail) dont le cylindre est fixé à la structure fixe 206, et plus particulièrement ici au cadre avant 210, et une tige fixée au coulisseau 218.

Afin d'orienter le flux d'air sortant de la fenêtre 220, des cascades peuvent être fixées sur le coulisseau 218 en regard de la fenêtre 220.

Le carter de soufflante 202 et les panneaux extérieurs 212 délimitent la fenêtre 220 en amont par rapport au sens d'écoulement et le capot mobile 216 délimite la fenêtre 220 en aval par rapport au sens d'écoulement.

Dans le mode de réalisation de l'invention présenté à la Fig. 3, le coulisseau 218 comporte un profilé en U 219 coaxial avec l'axe longitudinal X et ouvert vers l'axe longitudinal X.

La nacelle 102 comporte une pluralité de lames 250 qui sont déplacées par un système de manoeuvre.

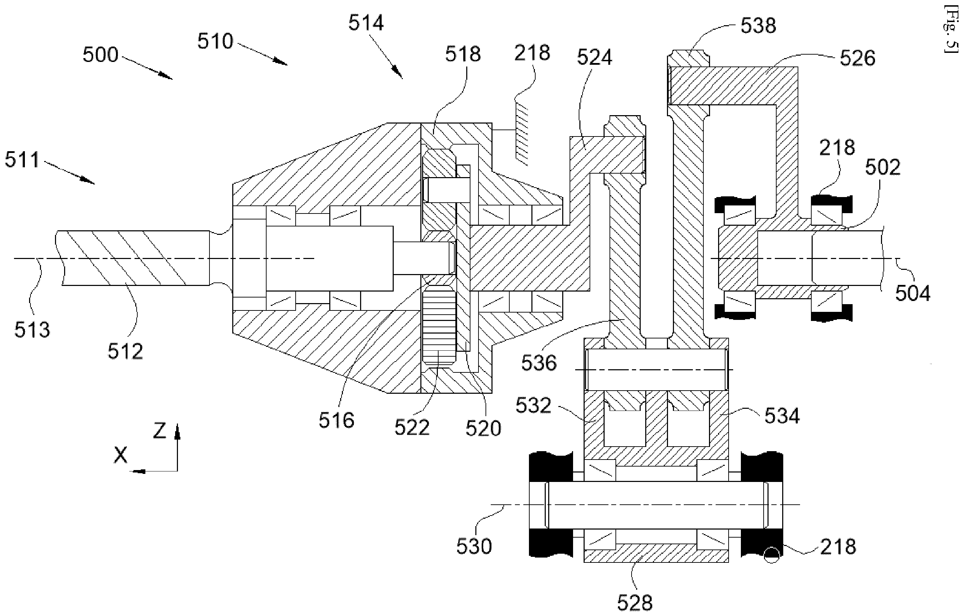

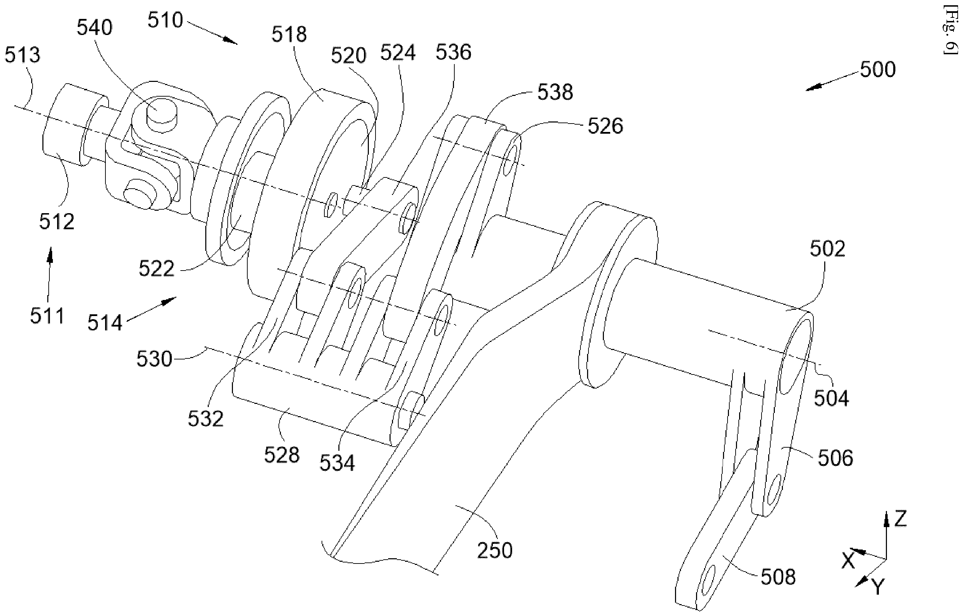

La Fig. 5 et la Fig. 6 montrent le système de manoeuvre 500.

Chaque lame 250 est montée mobile en rotation sur le coulisseau 218, ici sur le profilé en U 219, autour d'un premier axe de rotation 504 qui est ici globalement parallèle à la direction de translation. Chaque lame 250 est ainsi mobile entre une position escamotée (Fig. 2) dans laquelle la lame 250 est en dehors de la veine 204 et une position déployée (Fig. 3) dans laquelle la lame 250 est en travers de la veine 204 afin de dévier le flux secondaire 208 vers la fenêtre 220.

Chaque lame 250 est montée mobile au niveau d'une première extrémité tandis qu'une deuxième extrémité se rapproche du moteur 20 lorsque la lame 250 est déployée afin d'obturer au mieux la veine 204.

Les lames 250 sont décalées angulairement de proche en proche autour de l'axe longitudinal X. Le nombre de lames 250 ainsi que la forme de chacune d'elles dépendent des dimensions du turboréacteur double flux 100 ainsi que de la largeur de chaque lame 250 afin qu'en position déployée, les lames 250 obturent la plus grande partie de la veine 204.

Le passage de la position escamotée à la position déployée s'effectue par une rotation de la lame 250 vers l'intérieur du turboréacteur 100.

La position escamotée est adoptée lorsque le coulisseau 218 est en position avancée et la position déployée est adoptée lorsque le coulisseau 218 est en position reculée.

Le système de manoeuvre 500 déplace chaque lame 250 de la position escamotée à la position déployée lorsque le coulisseau 218 se déplace de la position avancée à la position reculée, et inversement.

Le fonctionnement consiste ainsi, à partir de la position avancée/escamotée, à commander l'activation des actionneurs 221 pour déplacer le coulisseau 218 de la position avancée à la position reculée. Au cours de ce déplacement, le système de manoeuvre 500 déplace les lames 250 de la position escamotée à la position déployée.

A l'inverse, le fonctionnement consiste ainsi, à partir de la position reculée/déployée, à commander l'activation des actionneurs pour déplacer le coulisseau 218 de la position reculée à la position avancée. Au cours de ce déplacement, le système de manoeuvre 500 déplace les lames 250 de la position déployée à la position escamotée.

L'utilisation des lames 250 montées rotatives sur le coulisseau 218 permet un allégement de l'ensemble par rapport à l'utilisation de portes d'inversion de l'état de la technique.

Pour chaque lame 250, le système de manoeuvre 500 comporte un arbre principal 502 qui est monté mobile en rotation sur le coulisseau 218 autour du premier axe de rotation 504, et auquel la lame 250 est fixée par sa première extrémité. Le passage de la position déployée à la position escamotée et inversement s'effectue par rotation autour du premier axe de rotation 504. Ici, chaque arbre principal 502 est monté mobile en rotation sur le coulisseau 218 et plus particulièrement le profilé en U 219.

Le système de manoeuvre 500 permet d'entraîner en rotation une pluralité de lames 250 disposées les unes à côté des autres. À cette fin, chaque arbre principal 502 comporte, ici en aval de la lame 250, un premier levier de transmission 506, prenant ici la forme d'une chape, et pour deux premiers leviers de transmission 506, le système de manoeuvre 500 comporte une bielle 508 dont chaque extrémité est montée articulée sur l'un des deux premiers leviers de transmission 506. L'articulation de la bielle 508 sur le premier levier de transmission 506 est ici une rotation dont l'axe de rotation est parallèle et désaxé par rapport au premier axe de rotation 504. Un tel arrangement permet ainsi, lorsque l'une des lames 250 est déplacée en rotation, de déplacer en rotation dans le même sens, en même temps, et de proche en proche, les autres lames 250.

Le premier levier de transmission 506 et la bielle 508 forment des moyens de transmission qui, pour chaque paire de lames 250 voisines, transmettent la rotation d'une lame 250 de la paire à l'autre lame 250 de la même paire. Ainsi, en déplaçant en rotation une première lame 250, les autres lames 250 qui lui sont associées se déplacent également. Les moyens de transmission comportent ainsi, pour chaque arbre principal 502 de la paire de lames 250 voisines, un premier levier de transmission 506 solidaire de l'arbre principal 502, et une bielle 508 dont chaque extrémité est montée articulée sur l'un des deux premiers leviers de transmission 506.

Pour manoeuvrer la première lame 250, le système de manoeuvre 500 comporte un système d'entraînement 510 qui, assure la conversion du mouvement de translation du coulisseau 218 en un mouvement de rotation de la première lame 250. Grâce aux moyens de transmission, le déplacement en rotation de la première lame 250 entraîne de proche en proche le déplacement des autres lames 250.

Le système d'entraînement 510 comporte un système de vis à billes 511 avec une tige rainurée 512 dont l'axe de vis 513 est globalement parallèle à la direction de translation, et un écrou à billes fixé à la structure fixe 206, et plus particulièrement ici au cadre avant 210, et où l'écrou à billes coopère avec la tige rainurée 512 pour créer une liaison hélicoïdale. La tige rainurée 512 est par ailleurs solidaire du coulisseau 218 et se déplace donc avec lui en translation. Autrement dit, la tige rainurée 512 est reliée au coulisseau 218 par une liaison pivot, de sorte à se déplacer en translation avec ledit coulisseau 218 tout en étant libre en rotation par rapport audit coulisseau 218. Ainsi, lorsque le coulisseau 218 se déplace en translation, la tige rainurée 512 se déplace en rotation du fait de l'interaction entre l'écrou à billes immobile et la tige rainurée 512.

Dans le mode de réalisation de l'invention présenté ici, l'axe de vis 513 de la tige rainurée 512 est aligné avec le premier axe de rotation 504.

Le système d'entraînement 510 comporte un train épicycloïdal 514 avec un pignon planétaire 516 solidaire d'une extrémité de la tige rainurée 512, une couronne planétaire 518 montée fixe sur le coulisseau 218 et plus particulièrement le profilé en U 219, un porte satellites 520 monté mobile en rotation sur le coulisseau 218 et plus particulièrement le profilé en U 219, et une pluralité de satellites 522 montés libres en rotation sur le porte satellites 520. Les satellites 522 sont répartis autour du pignon planétaire 516 et engrènent avec le pignon planétaire 516, et la couronne planétaire 518 entoure les satellites 522 et engrène avec eux. Les axes des éléments constituant le train épicycloïdal 514 sont tous globalement parallèles à la direction de translation.

Le système d'entraînement 510 comporte également un bras 524 solidaire du porte satellites 520 et désaxé par rapport à l'axe de vis 513.

L'arbre principal 502 de la première lame 250 comporte, ici en amont de la lame 250, un deuxième levier de transmission 526 solidaire dudit arbre principal 502.

Le système d'entraînement 510 comporte également un fût 528 monté mobile en rotation sur le coulisseau 218 et plus particulièrement le profilé en U 219 autour d'un deuxième axe de rotation 530 globalement parallèle à la direction de translation.

Le fût 528 porte un premier bras de basculement 532 et un deuxième bras de basculement 534, où dans le mode de réalisation de l'invention présenté ici, chaque bras de basculement 532 ,534 prend la forme d'une chape.

Le système d'entraînement 510 comporte également un premier levier 536 et un deuxième levier 538.

Une première extrémité du premier levier 536 est montée articulée sur le bras 524 et une deuxième extrémité du premier levier 536 est montée articulée sur le premier bras de basculement 532.

L'articulation du premier levier 536 sur le bras 524 est une rotation dont l'axe de rotation est parallèle et désaxé par rapport à l'axe de vis 513. L'articulation du premier levier 536 sur le premier bras de basculement 532 est une rotation dont l'axe de rotation est parallèle et désaxé par rapport au deuxième axe de rotation 530 du fût 528.

Une première extrémité du deuxième levier 538 est montée articulée sur le deuxième levier de transmission 526 et une deuxième extrémité du deuxième levier 538 est montée articulée sur le deuxième bras de basculement 534.

L'articulation du deuxième levier 538 sur le deuxième levier de transmission 526 est une rotation dont l'axe de rotation est parallèle et désaxé par rapport au premier axe de rotation 504. L'articulation du deuxième levier 538 sur le deuxième bras de basculement 534 est une rotation dont l'axe de rotation est parallèle et désaxé par rapport au deuxième axe de rotation 530 du fût 528.

Ainsi, lors du déplacement en translation du coulisseau 218, la tige rainurée 512 se déplace en translation et en rotation autour de l'axe de vis 513. La rotation de la tige rainurée 512 entraîne la mise en rotation du train épicycloïdal 514 et donc du porte satellites 520 et du bras 524. Le déplacement du bras 524 entraîne le basculement du fût 528 par action du premier levier 536 sur le premier bras de basculement 532. Le basculement du fût 528 entraîne le déplacement du deuxième bras de basculement 534 et donc le déplacement du deuxième bras de transmission 526 par action du deuxième levier 538. Le déplacement du deuxième bras de transmission 526 entraîne la rotation de l'arbre principal 502 et donc de la première lame 250 et par succession des autres lames 250.

Le système de manoeuvre 500 est ainsi particulièrement léger et simple à mettre en oeuvre. Pour éviter les éventuels problèmes de désalignement au cours du déplacement du coulisseau 218, la tige rainurée 512 est fixée au pignon planétaire 516 à travers un cardan 540.

Le deuxième levier de transmission 526, le deuxième levier 538 et le deuxième bras de basculement 534 sont dimensionnés de manière à ce qu'en position avancée du coulisseau 218 et en position escamotée des lames 250, le deuxième axe de rotation 530, l'axe de rotation de l'articulation entre le deuxième levier 538 et le deuxième bras de basculement 534, et l'axe de rotation de l'articulation entre le deuxième levier 538 et le deuxième levier de transmission 526, sont coplanaires et l'axe de rotation de l'articulation entre le deuxième levier 538 et le deuxième bras de basculement 534 est entre les deux autres. Cet arrangement permet d'atteindre une position maximale de blocage du fait de l'alignement des axes de rotation en position avancée/escamotée.

Le bras 524, le premier levier 536 et le premier bras de basculement 532 sont dimensionnés de manière à ce qu'en position reculée du coulisseau 218 et en position déployée des lames 250, l'axe de vis 513, l'axe de rotation de l'articulation entre le bras 524 et le premier levier 536, et l'axe de rotation de l'articulation entre le premier levier 536 et le premier bras de basculement 532, sont coplanaires et l'axe de rotation de l'articulation entre le bras 524 et le premier levier 536 est entre les deux autres. Cet arrangement permet d'atteindre une position maximale de blocage du fait de l'alignement des axes de rotation en position reculée/déployée.

Les lames 250, et notamment la première lame 250, sont amovibles pour des raisons de maintenance, et pour pouvoir être remplacées au besoin.

Un carter peut être agencé autour d'une partie du système d'entraînement 510, et notamment autour du train épicycloïdal 514, du bras 524, du deuxième levier de transmission 526, du fût 528, du premier levier 536 et un deuxième levier 538. Autrement dit, le système d'entraînement 510 peut être agencé dans le carter. Ceci permet avantageusement d'éviter une contamination (par des poussières par exemple) du système d'entraînement 510 et la mise en place d'un dispositif de lubrification du système d'entraînement 510 dans le carter.

L'invention a été plus particulièrement décrite dans le cas d'une nacelle sous une aile mais elle peut s'appliquer à une nacelle située à l'arrière du fuselage.

## Revendications

1. Turboréacteur double flux (100) présentant un axe longitudinal (X) et comportant un moteur (20) et une nacelle (102) entourant le moteur (20) qui comporte un carter de soufflante (202), où une veine (204) d'un flux secondaire (208) est délimitée entre la nacelle (102) et le moteur (20) et dans laquelle un flux d'air circule selon un sens d'écoulement, ladite nacelle (102) comportant :
- une structure fixe (206) fixée au carter de soufflante (202),
- un ensemble mobile (214) présentant un capot mobile (216) et un coulisseau (218), le capot mobile (216) étant fixé au coulisseau (218), le coulisseau (218) étant mobile en translation sur la structure fixe (206) selon une direction de translation entre une position avancée dans laquelle le coulisseau (218) est positionné de manière à ce que le capot mobile (216) soit rapproché du carter de soufflante (202) et une position reculée dans laquelle le coulisseau (218) est positionné de manière à ce que le capot mobile (216) soit éloigné du carter de soufflante (202) pour définir entre eux une fenêtre (220) ouverte entre la veine (204) et l'extérieur de la nacelle (102),
- une pluralité de lames (250) dont une lame (250) dite première lame (250), chacune comportant une première extrémité montée mobile en rotation sur le coulisseau (218) autour d'un premier axe de rotation (504) et où les lames (250) sont décalées angulairement de proche en proche autour de l'axe longitudinal (X), où chaque lame (250) est mobile entre une position escamotée dans laquelle la lame (250) est en dehors de la veine (204) et une position déployée dans laquelle la lame (250) est en travers de la veine (204),
- un ensemble d'actionneurs (221) assurant le déplacement du coulisseau (218) entre la position avancée et la position reculée, et inversement, et
- un système de manoeuvre (500) qui déplace chaque lame (250) de la position escamotée à la position déployée lorsque le coulisseau (218) se déplace de la position avancée à la position reculée, et inversement, où le système de manoeuvre (500) comporte :
- pour chaque lame (250), un arbre principal (502) monté mobile en rotation sur le coulisseau (218) autour du premier axe de rotation (504) auquel la lame (250) est fixée par sa première extrémité,
- pour chaque paire de lames (250) voisines, des moyens de transmission qui transmettent la rotation d'une lame (250) de la paire à l'autre lame (250) de la même paire,
- un système d'entraînement (510) qui assure la conversion du mouvement de translation du coulisseau (218) en un mouvement de rotation de la première lame (250) et **caractérisé en ce qu'**il comporte :
- un système de vis à billes (511) avec une tige rainurée (512) reliée par une liaison pivot au coulisseau (218) dont l'axe de vis (513) est globalement parallèle à la direction de translation, et un écrou à billes fixé à la structure fixe (206) où l'écrou à billes coopère avec la tige rainurée (512) pour créer une liaison hélicoïdale,
- un train épicycloïdal (514) avec un pignon planétaire (516) solidaire d'une extrémité de la tige rainurée (512), une couronne planétaire (518) montée fixe sur le coulisseau (218), un porte satellites (520) monté mobile en rotation sur le coulisseau (218), et une pluralité de satellites (522) montés libres en rotation sur le porte satellites (520), où les satellites (522) sont répartis autour du pignon planétaire (516) et engrènent avec le pignon planétaire (516), et où la couronne planétaire (518) entoure les satellites (522) et engrène avec eux,
- un bras (524) solidaire du porte satellites (520) et désaxé par rapport à l'axe de vis (513),
- un deuxième levier de transmission (526) solidaire dudit arbre principal (502) de la première lame (250),
- un fût (528) monté mobile en rotation sur le coulisseau (218) autour d'un deuxième axe de rotation (530) globalement parallèle à la direction de translation, où le fût (528) porte un premier bras de basculement (532) et un deuxième bras de basculement (534),
- un premier levier (536) où une première extrémité du premier levier (536) est montée articulée sur le bras (524) et une deuxième extrémité du premier levier (536) est montée articulée sur le premier bras de basculement (532), où l'articulation du premier levier (536) sur le bras (524) est une rotation dont l'axe de rotation est parallèle et désaxé par rapport à l'axe de vis (513) et où l'articulation du premier levier (536) sur le premier bras de basculement (532) est une rotation dont l'axe de rotation est parallèle et désaxé par rapport au deuxième axe de rotation (530) du fût (528),
- un deuxième levier (538) où une première extrémité du deuxième levier (538) est montée articulée sur le deuxième levier de transmission (526) et une deuxième extrémité du deuxième levier (538) est montée articulée sur le deuxième bras de basculement (534), et où l'articulation du deuxième levier (538) sur le deuxième levier de transmission (526) est une rotation dont l'axe de rotation est parallèle et désaxé par rapport au premier axe de rotation (504), et où l'articulation du deuxième levier (538) sur le deuxième bras de basculement (534) est une rotation dont l'axe de rotation est parallèle et désaxé par rapport au deuxième axe de rotation (530) du fût (528).

2. Turboréacteur double flux (100) selon la revendication 1, **caractérisé en ce que** le deuxième levier de transmission (526), le deuxième levier (538) et le deuxième bras de basculement (534) sont dimensionnés de manière à ce qu'en position avancée du coulisseau (218) et en position escamotée des lames (250), le deuxième axe de rotation (530), l'axe de rotation de l'articulation entre le deuxième levier (538) et le deuxième bras de basculement (534), et l'axe de rotation de l'articulation entre le deuxième levier (538) et le deuxième levier de transmission (526), sont coplanaires et l'axe de rotation de l'articulation entre le deuxième levier (538) et le deuxième bras de basculement (534) est entre les deux autres.

3. Turboréacteur double flux (100) selon l'une des revendications 1 ou 2, **caractérisé en ce que** le bras (524), le premier levier (536) et le premier bras de basculement (532) sont dimensionnés de manière à ce qu'en position reculée du coulisseau (218) et en position déployée des lames (250), l'axe de vis (513), l'axe de rotation de l'articulation entre le bras (524) et le premier levier (536), et l'axe de rotation de l'articulation entre le premier levier (536) et le premier bras de basculement (532), sont coplanaires et l'axe de rotation de l'articulation entre le bras (524) et le premier levier (536) est entre les deux autres.

4. Turboréacteur double flux (100) selon l'une des revendications 1 à 3, **caractérisé en ce que** les moyens de transmission comportent pour chaque arbre principal (502) de ladite paire de lames (250) voisines, un premier levier de transmission (506) solidaire dudit arbre principal (502), et une bielle (508) dont chaque extrémité est montée articulée sur l'un des deux premiers leviers de transmission (506).

5. Turboréacteur double flux (100) selon l'une des revendications 1 à 4, **caractérisé en ce que** la tige rainurée (512) est fixée au pignon planétaire (516) à travers un cardan (540).

6. Aéronef (10) comportant au moins un turboréacteur double flux (100) selon l'une des revendications précédentes.

## Patentansprüche

1. Mantelstromtriebwerk (100), welches eine Längsachse (X) aufweist und ein Kerntriebwerk (20) und eine das Kerntriebwerk (20) umgebende Gondel (102) umfasst, welche ein Gebläsegehäuse (202) umfasst, wobei ein Strömungskanal (204) eines Sekundärstroms (208) zwischen der Gondel (102) und dem Kerntriebwerk (20) begrenzt wird, in welchem ein Luftstrom in einer Strömungsrichtung strömt, wobei die Gondel (102) umfasst:
- eine feststehende Struktur (206), die am Gebläsegehäuse (202) befestigt ist,
- eine bewegliche Anordnung (214), die eine bewegliche Haube (216) und einen Gleitblock (218) aufweist, wobei die bewegliche Haube (216) an dem Gleitblock (218) befestigt ist, wobei der Gleitblock (218) auf der feststehenden Struktur (206) in einer Translationsrichtung translatorisch beweglich ist zwischen einer vorgeschobenen Position, in welcher der Gleitblock (218) so positioniert ist, dass die bewegliche Haube (216) an das Gebläsegehäuse (202) angenähert ist, und einer zurückgeschobenen Position, in welcher der Gleitblock (218) so positioniert ist, dass die bewegliche Haube (216) von dem Gebläsegehäuse (202) entfernt ist, um zwischen ihnen ein offenes Fenster (220) zwischen dem Strömungskanal (204) und der Außenseite der Gondel (102) zu definieren,
- mehrere Lamellen (250), darunter eine als erste Lamelle (250) bezeichnete Lamelle (250), die jeweils ein erstes Ende umfassen, das an dem Gleitblock (218) drehbeweglich um eine erste Drehachse (504) angebracht ist, und wobei die Lamellen (250) um die Längsachse (X) zueinander winkelversetzt sind, wobei jede Lamelle (250) zwischen einer eingeklappten Position, in der sich die Lamelle (250) außerhalb des Strömungskanals (204) befindet, und einer eingeklappten Position, in der die Lamelle (250) quer zum Strömungskanal (204) angeordnet ist, beweglich ist,
- eine Anordnung von Aktuatoren (221), welche die Verlagerung des Gleitblocks (218) zwischen der vorgeschobenen Position und der zurückgeschobenen Position und umgekehrt sicherstellt, und
- ein Betätigungssystem (500), das jede Lamelle (250) aus der eingeklappten Position in die ausgeklappte Position verlagert, wenn sich der Gleitblock (218) aus der vorgeschobenen Position in die zurückgeschobene Position bewegt, und umgekehrt, wobei das Betätigungssystem (500) umfasst:
- für jede Lamelle (250) eine Hauptwelle (502), die am Gleitblock (218) drehbeweglich um die erste Drehachse (504) angebracht ist und an der die Lamelle (250) mit ihrem ersten Ende befestigt ist,
- für jedes Paar benachbarter Lamellen (250) Übertragungsmittel, welche die Drehung einer Lamelle (250) des Paares auf die andere Lamelle (250) desselben Paares übertragen,
- ein Antriebssystem (510), das die Umwandlung der Translationsbewegung des Gleitblocks (218) in eine Drehbewegung der ersten Lamelle (250) sicherstellt und **dadurch gekennzeichnet ist, dass** es umfasst:
- ein Kugelumlaufspindelsystem (511) mit einer gerillten Stange (512), die durch eine Gelenkverbindung mit dem Gleitblock (218) verbunden ist und deren Schraubenachse (513) im Wesentlichen parallel zur Translationsrichtung ist, und einer an der feststehenden Struktur (206) befestigten Kugelumlaufmutter, wobei die Kugelumlaufmutter mit der gerillten Stange (512) zusammenwirkt, um eine schraubenförmige Verbindung zu erzeugen,
- ein Planetengetriebe (514) mit einem Sonnenrad (516), das mit einem Ende der gerillten Stange (512) fest verbunden ist, einem Hohlrad (518), das am Gleitblock (218) fest angebracht ist, einem Planetenträger (520), der am Gleitblock (218) drehbeweglich gelagert ist, und mehreren Planetenrädern (522), die auf dem Planetenträger (520) frei drehbar gelagert sind, wobei die Planetenräder (522) um das Sonnenrad (516) herum verteilt sind und mit dem Sonnenrad (516) kämmen, und wobei das Hohlrad (518) die Planetenräder (522) umgibt und mit ihnen kämmt,
- einen Arm (524), der mit dem Planetenträger (520) fest verbunden ist und bezüglich der Schraubenachse (513) versetzt ist,
- einen zweiten Übertragungshebel (526), der mit der Hauptwelle (502) der ersten Lamelle (250) fest verbunden ist,
- einen Schaft (528), der am Gleitblock (218) drehbeweglich um eine zweite Drehachse (530) angebracht ist, die im Wesentlichen parallel zur Translationsrichtung ist, wobei der Schaft (528) einen ersten Schwenkarm (532) und einen zweiten Schwenkarm (534) trägt,
- einen ersten Hebel (536), wobei ein erstes Ende des ersten Hebels (536) am Arm (524) angelenkt ist und ein zweites Ende des ersten Hebels (536) am ersten Schwenkarm (532) angelenkt ist, wobei das Gelenk des ersten Hebels (536) am Arm (524) ein Drehgelenk ist, dessen Drehachse parallel zur Schraubenachse (513) und zu dieser versetzt ist, und wobei das Gelenk des ersten Hebels (536) am ersten Schwenkarm (532) ein Drehgelenk ist, dessen Drehachse parallel zur zweiten Drehachse (530) des Schaftes (528) und zu dieser versetzt ist,
- einen zweiten Hebel (538), wobei ein erstes Ende des zweiten Hebels (538) am zweiten Übertragungshebel (526) angelenkt ist und ein zweites Ende des zweiten Hebels (538) am zweiten Schwenkarm (534) angelenkt ist, und wobei das Gelenk des zweiten Hebels (538) am zweiten Übertragungshebel (526) ein Drehgelenk ist, dessen Drehachse parallel zur ersten Drehachse (504) und zu dieser versetzt ist, und wobei das Gelenk des zweiten Hebels (538) am zweiten Schwenkarm (534) ein Drehgelenk ist, dessen Drehachse parallel zur zweiten Drehachse (530) des Schaftes (528) und zu dieser versetzt ist.

2. Mantelstromtriebwerk (100) nach Anspruch 1, **dadurch gekennzeichnet, dass** der zweite Übertragungshebel (526), der zweite Hebel (538) und der zweite Schwenkarm (534) so bemessen sind, dass in der vorgeschobenen Position des Gleitblocks (218) und in der eingeklappten Position der Lamellen (250) die zweite Drehachse (530), die Drehachse des Gelenks zwischen dem zweiten Hebel (538) und dem zweiten Schwenkarm (534) und die Drehachse des Gelenks zwischen dem zweiten Hebel (538) und dem zweiten Übertragungshebel (526) koplanar sind und die Drehachse des Gelenks zwischen dem zweiten Hebel (538) und dem zweiten Schwenkarm (534) sich zwischen den zwei anderen befindet.

3. Mantelstromtriebwerk (100) nach Anspruch 1 oder 2, **dadurch gekennzeichnet, dass** der Arm (524), der erste Hebel (536) und der erste Schwenkarm (532) so bemessen sind, dass in der zurückgeschobenen Position des Gleitblocks (218) und in der ausgeklappten Position der Lamellen (250) die Schraubenachse (513), die Drehachse des Gelenks zwischen dem Arm (524) und dem ersten Hebel (536) und die Drehachse des Gelenks zwischen dem ersten Hebel (536) und dem ersten Schwenkarm (532) koplanar sind und die Drehachse des Gelenks zwischen dem Arm (524) und dem ersten Hebel (536) sich zwischen den zwei anderen befindet.

4. Mantelstromtriebwerk (100) nach einem der Ansprüche 1 bis 3, **dadurch gekennzeichnet, dass** die Übertragungsmittel für jede Hauptwelle (502) des Paares benachbarter Lamellen (250) einen ersten Übertragungshebel (506), der mit der Hauptwelle (502) fest verbunden ist, und eine Schubstange (508), von der jedes Ende an einem der zwei Übertragungshebel (506) angelenkt ist, umfassen.

5. Mantelstromtriebwerk (100) nach einem der Ansprüche 1 bis 4, **dadurch gekennzeichnet, dass** die gerillte Stange (512) über ein Kardangelenk (540) an dem Sonnenrad (516) befestigt ist.

6. Luftfahrzeug (10), welches mindestens ein Mantelstromtriebwerk (100) nach einem der vorhergehenden Ansprüche umfasst.

## Claims

1. Turbofan (100) having a longitudinal axis (X) and having a motor (20) and a nacelle (102) that surrounds the motor (20) and has a fan casing (202), wherein a duct (204) for a bypass flow (208) is delimited between the nacelle (102) and the motor (20) and in which a flow of air circulates in a flow direction, said nacelle (102) having:
- a fixed structure (206) fastened to the fan casing (202),
- a mobile assembly (214) having a mobile cowl (216) and a slider (218), the mobile cowl (216) being fastened to the slider (218), the slider (218) being able to move in translation on the fixed structure (206) in a direction of translation between an advanced position in which the slider (218) is positioned such that the mobile cowl (216) is close to the fan casing (202) and a retracted position in which the slider (218) is positioned such that the mobile cowl (216) is distanced from the fan casing (202) so as to define between them a window (220) that is open between the duct (204) and the outside of the nacelle (102),
- a plurality of blades (250) including a blade (250) known as first blade (250), each one having a first end mounted so as to be able to move in rotation on the slider (218) about a first axis of rotation (504) and wherein the blades (250) are angularly offset from one to the next about the longitudinal axis (X), wherein each blade (250) is able to move between a stowed position in which the blade (250) is outside the duct (204) and a deployed position in which the blade (250) is across the duct (204),
- a set of actuators (221) that move the slider (218) between the advanced position and the retracted position, and vice versa, and
- a manoeuvring system (500) that moves each blade (250) from the stowed position to the deployed position when the slider (218) moves from the advanced position to the retracted position, and vice versa, wherein the manoeuvring system (500) has:
- for each blade (250), a main shaft (502) mounted so as to be able to move in rotation on the slider (218) about the first axis of rotation (504) to which the blade (250) is fastened by its first end,
- for each pair of adjacent blades (250), transmission means that transmit the rotation of one blade (250) of the pair to the other blade (250) of the same pair,
- a drive system (510) that converts the translational movement of the slider (218) into a rotational movement of the first blade (250) and **characterized in that** it has:
- a ball screw system (511) with a grooved rod (512) that is linked to the slider (218) by a pivot link, of which the screw axis (513) is generally parallel to the translation direction, and a ball nut fastened to the fixed structure (206) wherein the ball nut cooperates with the grooved rod (512) so as to create a helical connection,
- an epicyclic gear train (514) with a sun gear (516) as one with an end of the grooved rod (512), an annulus gear (518) mounted fixedly on the slider (218), a planet carrier (520) mounted so as to be able to move in rotation on the slider (218), and a plurality of planet gears (522) mounted so as to be able to rotate freely on the planet carrier (520), wherein the planet gears (522) are distributed about the sun gear (516) and mesh with the sun gear (516), and wherein the annulus gear (518) surrounds the planet gears (522) and meshes with them,
- an arm (524) as one with the planet carrier (520) and offset with respect to the screw axis (513),
- a second transmission lever (526) as one with said main shaft (502) of the first blade (250),
- a barrel (528) mounted so as to be able to move in rotation on the slider (218) about a second axis of rotation (530) generally parallel to the translation direction, wherein the barrel (528) bears a first tilting arm (532) and a second tilting arm (534),
- a first lever (536) wherein a first end of the first lever (536) is mounted articulated on the arm (524) and a second end of the first lever (536) is mounted articulated on the first tilting arm (532), wherein the articulation of the first lever (536) on the arm (524) is a rotation of which the axis of rotation is parallel and offset with respect to the screw axis (513) and wherein the articulation of the first lever (536) on the first tilting arm (532) is a rotation of which the axis of rotation is parallel and offset with respect to the second axis of rotation (530) of the barrel (528),
- a second lever (538) wherein a first end of the second lever (538) is mounted articulated on the second transmission lever (526) and a second end of the second lever (538) is mounted articulated on the second tilting arm (534), and wherein the articulation of the second lever (538) on the second transmission lever (526) is a rotation of which the axis of rotation is parallel and offset with respect to the first axis of rotation (504), and wherein the articulation of the second lever (538) on the second tilting arm (534) is a rotation of which the axis of rotation is parallel and offset with respect to the second axis of rotation (530) of the barrel (528).

2. Turbofan (100) according to Claim 1, **characterized in that** the second transmission lever (526), the second lever (538) and the second tilting arm (534) are dimensioned such that when the slider (218) is in the advanced position and the blades (250) are in the stowed position, the second axis of rotation (530), the axis of rotation of the articulation between the second lever (538) and the second tilting arm (534), and the axis of rotation of the articulation between the second lever (538) and the second transmission lever (526), are coplanar and the axis of rotation of the articulation between the second lever (538) and the second tilting arm (534) is between the two others.

3. Turbofan (100) according to either of Claims 1 and 2, **characterized in that** the arm (524), the first lever (536) and the first tilting arm (532) are dimensioned such that when the slider (218) is in the retracted position and the blades (250) are in the deployed position, the screw axis (513), the axis of rotation of the articulation between the arm (524) and the first lever (536), and the axis of rotation of the articulation between the first lever (536) and the first tilting arm (532), are coplanar and the axis of rotation of the articulation between the arm (524) and the first lever (536) is between the two others.

4. Turbofan (100) according to one of Claims 1 to 3, **characterized in that** the transmission means have, for each main shaft (502) of said pair of adjacent blades (250), a first transmission lever (506) as one with said main shaft (502), and a connecting rod (508) of which each end is mounted articulated on one of the two first transmission levers (506).

5. Turbofan (100) according to one of Claims 1 to 4, **characterized in that** the grooved rod (512) is fastened to the sun gear (516) via a universal joint (540).

6. Aircraft (10) having at least one turbofan (100) according to one of the preceding claims.
